# NEW EUROPEAN PATENT SPECIFICATION

(11) **EP 3 236 831 B2**
(45) Date of publication and mention of the opposition decision: **01.10.2025**
(45) Mention of the grant of the patent: 04.11.2020
(21) Application number: 15820958.5
(22) Date of filing: 16.12.2015
(51) Int. Cl.: A47L 15/00, A47L 15/42

(54) **ADJUSTABLE WASHING/RINSING DEVICE, STATIC DISHWASHING MACHINE EQUIPPED THEREWITH AND ASSOCIATED METHOD**
EINSTELLBARE WASCH-/SPÜLVORRICHTUNG, STATISCHE GESCHIRRSPÜLMASCHINE DAMIT UND ZUGEHÖRIGES VERFAHREN
DISPOSITIF DE LAVAGE/RINÇAGE AJUSTABLE, LAVE-VAISSELLE STATIQUE ÉQUIPÉ DE CELUI-CI ET PROCÉDÉ ASSOCIÉ

(30) Priority: 24.12.2014 IT TO20141101
(43) Date of publication of application: 01.11.2017
(73) Proprietor: Illinois Tool Works Inc., Glenview, IL 60025 (US)
(72) Inventor: CHERICONI, Alessio, 55010 Badia Pozzeveri Altopascio (LU) (IT); ORLANDI, Riccardo, 55010 Badia Pozzeveri Altopascio (LU) (IT); CEVOLONI, Norberto, 37048 San Pietro Di Legnano (VR) (IT)
(74) Representative: Meissner Bolte Partnerschaft mbB
(86) International application number: PCT/US2015/065935
(87) International publication number: WO 2016/106028

(56) References cited:
- EP-A2- 0 943 282
- WO-A1-03/051173
- WO-A2-2013/111170
- DE-A1- 102007 005 834
- US-A- 5 017 852

## Description

The present invention relates to a low-cost, compact, adjustable washing/rinsing device which is able to achieve a significant reduction in the amount of energy and water, in particular rinsing water, used during the usual washing cycles. The invention also relates to a dishwashing machine including this device and to an associated method.

Static dishwashing machines, of "under counter" or hood type, comprise a casing or housing defining a washing chamber inside which the dishware to be washed is placed, usually being arranged inside a basket. The washing and/or rinsing water is fed inside the washing chamber and directly onto the dishware by a pair of arms, e.g. a lower arm and an upper arm, which are arranged respectively below and above the basket containing the dishware and are connected to a washing/rinsing device which includes the arms and which feeds water simultaneously to both the arms.

It is also known that static dishwashing machines, in particular those for professional use (in community centers, hotels, restaurants, etc.), are often used to wash separately different types of dishware, such as plates, glasses, cups, etc., which require different amounts of rinsing water fed to the arms and a different distribution of the rinsing water between the arms. For example, the distribution of optimum rinsing water varies depending on the type of dishware treated in each case: for glasses it is required to supply more water from below (which is therefore fed to the lower rinsing arm) at a lower temperature (for example 65°C), while for plates it is required to supply more water from above (which is therefore fed to the upper rinsing arm) at a higher temperature (for example 80°C).

The known dishwashing machines instead always use the same quantity of rinsing water, at the same temperature, for both the arms and this results in a wastage of water with consequent greater costs. Since, moreover, the rinsing water is in any case heated to high temperatures, an excessive consumption of water also results in a greater energy consumption, with further higher costs. Documents EP-A-0943282 and WO-A-03/051173 do not disclose any solution able to completely solve the above problem.

The object of the invention is to provide an adjustable washing/rinsing device which does not have the drawbacks described and in particular is easy and inexpensive to produce, being extremely efficient and reliable and having a small overall volume. A further object of the invention is to provide a static dishwashing machine, in particular of the professional type, and a washing/rinsing method, where it is possible to adjust in a simple and effective manner the amount of water supplied by the arms during washing and, in particular, during rinsing.

On the basis of the invention, therefore, an adjustable rinsing device, a static dishwashing machine, in particular of the professional type, and an associated method are provided in accordance with that defined in the attached claims.

Further objects and advantages of the invention will become clear from the description below of a number of non-limiting examples of embodiment thereof provided purely by way of example and with reference to the figures of the attached drawings, in which:
Figure 1 shows in schematic form a static dishwashing machine and an associated washing/rinsing device provided according to the invention; and
Figures 2 and 3 show hydraulic diagrams of two possible variants of the washing/rinsing device according to the invention, which can be used in the static dishwashing machine according to Figure 1.

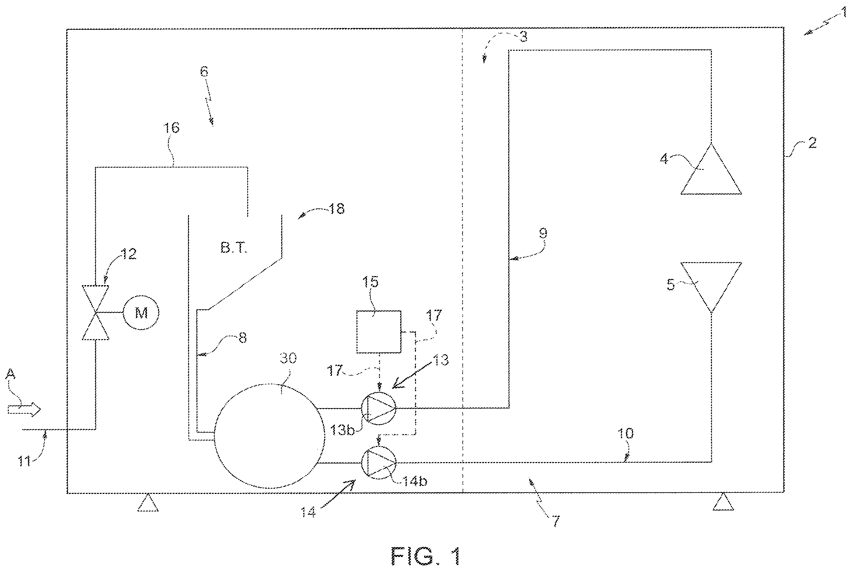

With reference to Figure 1, 1 denotes overall a static dishwashing machine of the professional type (i.e. designed for heavy-duty use in public premises, such as bars, restaurants and community centers), illustrated solely in schematic form for the sake of simplicity, comprising a casing or housing 2 which defines internally a liquid-tight sealable chamber 3 for housing dishware to be washed and rinsed (known and not shown for the sake of simplicity) which is normally arranged in a basket (also known and not shown for the sake of simplicity) housed on the bottom of the chamber 3.

The chamber 3, which is accessible via a door - known and not shown for the sake of simplicity - in order to load and unload the basket and the dishware contained inside it, has arranged internally at least a first arm 4, in the example shown an upper arm 4 arranged during use above the dishware to be washed, for example rotatably mounted on the ceiling of the chamber 3, and at least a second arm 5, in the example shown a lower arm 5 arranged during use underneath the basket and the dishware to be washed, for example rotatably mounted on the bottom or floor of the chamber 3. The arms 4 and 5 are known and are illustrated only schematically for the sake of simplicity.

The dishwashing machine 1 is equipped with an adjustable washing/rinsing device - denoted overall by the reference number 6 - which has the function of treating the dishware contained inside the dishwashing machine 1 and which is housed inside the casing 2, separately from the chamber 3.

The device 6 comprises the at least one first, upper, arm 4 and at least one second, lower, arm 5 for supplying a washing/rinsing fluid, or process fluid, inside the chamber 3 and towards the dishware, and means 7 for feeding the washing/rinsing fluid to the arms 4,5 including a hydraulic circuit 8 which feeds main water A (indicated by the arrow in Figure 1) hydraulically in parallel to the at least first arm 4 and the at least second arm 5.

The washing/rinsing fluid, or process fluid, may be formed by the mains water A to which optionally detergents or other substances are added via supplying devices - known and not shown for the sake of simplicity - forming part of the device 6.

The hydraulic circuit 8 comprises in particular a first branch 9 which feeds process fluid to the first arm 4 and a second branch 10 which feeds process fluid to the second arm 5.

The first branch 9 and the second branch 10 are arranged hydraulically in parallel with each other between an inlet 11 for introducing mains water A into the hydraulic circuit 8, controlled by an automated gate valve 12, and the at least first and second arms 4,5.

According to the main aspect of the invention, each branch 9 and 10 is provided hydraulically in series with means for supplying the washing/rinsing fluid to the respective arms 4, 5, indicated overall by the reference numbers 13 and 14, which means 13 and 14 can be activated selectively and independently; the washing/rising device 6 further comprises, in combination with the separate and independent means 13,14 for supplying the separate and independent branches 9 and 10 and the different arms 4 and 5, control means 15 - illustrated schematically in the form of a block - able to activate selectively and independently of one another the means 13 for supplying the first branch 9 and the means 14 for supplying the second branch 10 for time periods different from each other, depending on the type of dishware present in the chamber 3.

According to the present invention, the control means 15 for activating selectively the means 13, 14 for supplying the first and second branches 9, 10 for different time periods activate the means 13 for supplying the first branch 9 and means 14 for supplying the second branch 10 simultaneously (in the sense that supplying of the process fluid is activated together at the same instant in the branches 9 and 10, but then lasts a different period of time, so that, when supplying of fluid along one branch 9, 10, for example along the branch 9, ceases after a first predefined time period, it may continues along the other branch, for example the branch 10, until a second predefined time period, different from - and in this case greater than - the first predefined time period lapses). In a variant not forming part of the invention, control means 15 for activating selectively the means 13, 14 for supplying the first and second branches 9, 10 for different time periods may be able to activate the means 13 for supplying the first branch 9 and means 14 for supplying the second branch in sequence (in the sense that process fluid is first fed only to a first one of the branches 9, 10, for example the branch 9, for a first predefined time period and, then, once supplying along the first branch has ceased, the supplying of process fluid is performed along a second one of the branches 9, 10, for example along the branch 10, for a second predefined time period, different from the first time period).

In the non-limiting example of embodiment shown in Figure 1, the means 13, 14 for supplying the washing/rinsing fluid to the respective first arm 4 and second arm 5, which can be activated selectively and independently, is formed by a first electric pump 13b arranged in series on the first branch 9 and a second electric pump 14b arranged in series on the second branch 10; the control means 15 therefore control selective operation of the first electric pump 13b and the second electric pump 14b for predefined time periods different from each other, independently for the first and second electric pumps 13b, 14b.

According to this embodiment, the hydraulic circuit comprises hydraulically in sequence downstream of the inlet 11 for the mains water A and upstream of the first branch 9 and the second branch 10 (the terms "upstream" and "downstream" referring to the direction of flow of the mains water A indicated by the arrow, from the inlet 11 and towards the arms 4, 5) a boiler 30 at atmospheric pressure, which heats the mains water A, inside it at ambient pressure, to a desired temperature. From the boiler 30 the first electric pump 13b and the second electric pump 14b draw water in order to generate the washing/rinsing fluid to be fed to the arms 4, 5.

The electric pumps 13b and 14b are activated and deactivated upon operation of the control means 15 which may, for example, be formed as a dedicated electronic control unit connected to the electric pumps 14b, 15b via dedicated electric control lines 17 shown schematically in broken lines in Figure 1.

The hydraulic circuit 8 comprises in this case, proceeding in sequence in the direction of the mains water flow A, the inlet 11, a pipe section 16 provided in series with the gate valve 12 and leading into a "blow-off" device 18 for zeroing the mains water pressure, the boiler 30, which receives directly water at atmospheric pressure from the device 17, the branches 9 and 10 which depart in parallel both from the boiler 30, the pumps 13b, 14b arranged in series on the respective branches 9 and 10, and the arms 4,5 from which the process fluid is expelled towards the dishware inside the chamber 3.

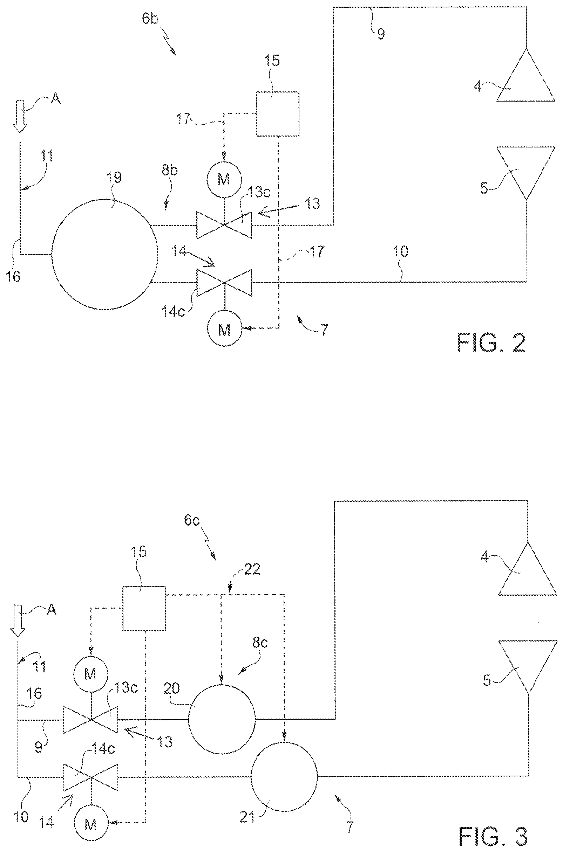

With reference now to Figures 2 and 3, two possible variants 6b, 6c of the washing/rinsing device 6 already described are shown in them. Details similar to or the same as those already described are indicated for the sake of simplicity by the same reference numbers. The devices 6b, 6c may replace the device 6 already described inside the dishwashing machine 1.

The device 6b (Figure 2) is similar to the device 6 described since it comprises the arms 4, 5 and means 7 for feeding the washing/rinsing fluid to the arms 4, 5. It includes, however, a different hydraulic circuit 8b: firstly, there is no "blow-off' device, but the inlet 11 introduces the mains water A directly inside a pressurized boiler 19 via a pipe section 16. The two branches 9 and 10 depart in parallel from the pressurized boiler 19 and connect the boiler 19 to the arms 4 and 5. The mains water A is under pressure inside the boiler 19, which heats it to a desired temperature.

In this embodiment the means 13, 14 for supplying the washing/rinsing fluid to the respective first arm 4 and the second arm 5, which can be activated selectively and independently, is formed by a first electric valve 13c of the on/off (open/closed) type arranged hydraulically in series on the first branch 9 and a second electric valve 14c of the on/off type arranged hydraulically in series on the second branch 10; the control means 15, which are also present, controlling in this embodiment the selective opening of the first electric valve 13c and the second electric valve 14c for predefined time periods different from each other, independently for the first electric valve 13c and for the second electric valve 14c.

In this embodiment, therefore, the hydraulic circuit 6b comprises hydraulically in sequence downstream of the inlet 11 for mains water A and upstream of the first branch 9 and the second branch 10 the pressurized boiler 19, which is connected hydraulically to the first arm 4 and to the second arm 5 via the branches 9 and 10, respectively, which are intercepted by the electric valves 13c and 14c, respectively. In this way, opening of the electric valves 13c,14c causes supplying from the pressurized boiler 19 of water (which is under pressure and may therefore flow without the use of pumps along the branches 9, 10 if the respective electric valves 13c,14c are open) so as to generate the washing/rinsing fluid. When, instead, the electric valves 13c, 14c are closed, there is no supplying of water or process fluid from the boiler 19 to the arms 4, 5.

The control means 15 in this case may be a dedicated electronic control unit connected to the electric valves 14c, 15c via dedicated electric control lines 17 shown schematically in broken lines.

The hydraulic circuit 8b comprises in this case, proceeding in sequence in the direction of the water mains flow A, the inlet 11, the pipe section 16, optionally (but not necessarily) provided in series with the gate valve 12 (not shown for the sake of simplicity) and leading directly into the pressurized boiler 19, the boiler 19, the branches 9 and 10 which depart in parallel both from the boiler 19, the electric valves 13c, 14c arranged in series on the respective branches 9 and 10, and the arms 4,5 from which the process fluid is expelled towards the dishware inside the chamber 3.

According to the present invention, the control means 15 for selectively activating the supplying means 13,14 of the first and second branches 9,10 for different time periods activates (and therefore opens) the electric valve 13c of the first branch 9 and the electric valve 14c of the second branch 10 (which otherwise, if they are not operated by the control means 15, are normally closed) simultaneously.

The supplying means 13, 14 are activated simultaneously, such that the supplying of process fluid is activated by the control unit 15 together, at the same instant, in the branches 9 and 10, opening simultaneously the electric valves 13c, 14c, but then lasts a different period of time, since one of the two electric valves 13c, 14c is closed by the control means 15 before the other one, so that, when supplying of fluid along one branch 9, 10, for example along the branch 9, ceases, after a predefined time period, since the electric valve 13c has been closed by the control unit 15, it continues along the other branch 10, for example the branch, until a second predefined time, different from and, in this case greater than, the first predefined time period lapses, following which the control unit 15 also closes the electric valve 14c.

If, in a variant not forming part of the invention, the supplying means 13, 14 are activated in sequence, process fluid is first fed only to a first one of the branches 9, 10, for example to the branch 9, opening the electric valve 13c, for a first predefined time period and, then, once supplying along the first branch has ceased, after closing of the electric valve 13c by means of the control unit 15, the supplying of process fluid is performed along a second one of the branches 9, 10, for example along the branch 10, opening the electric valve 14c by means of the control unit 15, for a second predefined time period, different from the first time period.

With reference to Figure 3, the device 6c is entirely similar to the device 6b described above, with the sole difference that the boiler 19 is missing; instead, the hydraulic circuit 8c is provided hydraulically in series on the first branch 9 and on the second branch 10, downstream of the inlet 11 for mains water A and downstream of the first electric valve 13c and the second electric valve 14c, of a first pressurized boiler 20 and a second pressurized boiler 21, respectively, which can be independently activated at different temperatures by means of the control means 15 which are also connected to the boilers 20 and 21 by means of an electric control line 22.

The boilers 20 and 21 are hydraulically connected directly to the first arm 4 and to the second arm 5, respectively, and are hydraulically connected, on the opposite side to the arms 4, 5 and via the first electric valve 13c and the second electric valve 14c to the pipe section 16 and to the inlet 11 for pressurized mains water A. In this way, the first and second pressurized boilers 20 and 21 supply to the arms 4, 5, but only when the valves 13c,14c are open, water for generating the washing/rinsing fluid.

In accordance with that shown in Figure 3, therefore, the hydraulic circuit 8c comprises, proceeding in sequence in the direction of the mains water flow A, the inlet 11, the pipe section 16, optionally (but not necessarily) provided in series with the gate valve 12 (not shown for the sake of simplicity), the branches 9 and 10 which branch off in parallel both directly from the pipe section 16, the electric valves 13c, 14c arranged in series on the respective branches 9 and 10, the boilers 20 and 21 arranged in series on the respective branches 9 and 10 immediately downstream of the respective valves 13c and 14c, and the arms 4, 5 arranged immediately downstream of the boilers 20 and 21, respectively, from which boilers the pressurized process fluid, when the valves 13c, 14c are open, is supplied to the arms 4 and 5 which expel it towards the dishware inside the chamber 3.

From that described above it is evident that the invention also relates to a washing/rinsing method for washing/rinsing dishware present inside a static dishwashing machine, such as the dishwashing machine 1, wherein a washing/rinsing fluid is supplied to a first arm, for example upper arm 4, and to a second arm, for example lower arm 5, of the dishwashing machine 1 via a hydraulic circuit 8 or 8b, or 8c, where the washing/rinsing fluid is supplied selectively and independently to the first arm 4 and to the second arm 5 for time periods different from each other, depending on the type of dishware to be washed/rinsed.

The method according to the invention also envisages that the washing/rinsing fluid is supplied to the first arm 4 and to the second arm 5 simultaneously, preferably at different temperatures, this latter operation being made possible by the hydraulic circuit 8c, owing to the presence of two separate boilers 20 and 21, which separately serve the branches 9 and 10.

When glasses are present in the dishwashing machine 1, during the conventional rinsing cycle, the process fluid (mains water) is supplied for a greater period of time to the arm 5 by suitably operating the pump 14b or the valve 14c; vice versa, when plates are present in the dishwashing machine 1, during the conventional rinsing cycle, the process fluid (mains water) is supplied for a greater period of time to the arm 4 by suitably operating the pump 13b or the valve 13c. In both cases, the supplying, to the other arm, of hot water which is not necessary is avoided, thus obtaining net savings of energy and water.

All the objects of the invention are therefore achieved.

## Claims

1. Adjustable washing/rinsing device (6, 6b, 6c) for dishware contained inside a static dishwashing machine (1), in particular of the professional type, comprising at least a first arm (4), for example upper arm, for supplying a washing/rinsing fluid, at least a second arm (5), for example lower arm, for supplying a washing/rinsing fluid, and means (7) for feeding the washing/rinsing fluid to the arms including a hydraulic circuit (8, 8b, 8c) which feeds mains water hydraulically in parallel to the at least first arm (4) and to the at least second arm (5), the hydraulic circuit comprising a first branch (9) for feeding the first arm (4) and a second branch (10) for feeding the second arm (5), the first and second branches (9,10) being arranged hydraulically in parallel with each other between an inlet (11) for introducing mains water into the hydraulic circuit (8, 8b, 8c) and at least the first and second arms; wherein each first branch (9) and second branch (10) is provided hydraulically in series with means (13, 14) for supplying the washing/rinsing fluid to the respective first and second arms (4, 5), which can be activated selectively and independently; the washing/rinsing device further comprising control means (15) for selectively activating the means (13, 14) for supplying the first and second branches (9, 10),
**characterized in that**
the control means (15) are configured for selectively activating the means (13, 14) for supplying the first and second branches (9, 10) simultaneously for time periods different from each other, depending on the type of dishware, said different time for different periods of time.

2. Device according to Claim 1,
**characterized in that**
the means (13, 14) for supplying the washing/rinsing fluid to the respective first and second arms (9, 10), which can be activated selectively and independently, consist of a first electric pump (13b) arranged in series on the first branch (9) and of a second electric pump (14b) arranged in series on the second branch (10); the control means (15) controlling selective operation of the first and second electric pumps (13b, 14b) for predetermined and different time periods independently for the first and second electric pumps (13b, 14b).

3. Device according to Claim 2,
**characterized in that**
the hydraulic circuit (8) comprises hydraulically in sequence downstream of the mains water inlet (11) and upstream of the first and second branches (9,10) an atmospheric pressure boiler (30) from which the first and second electric pumps (13b, 14b) draw water in order to generate the washing/rinsing fluid.

4. Device according to Claim 1,
**characterized in that**
the means (13, 14) for supplying the washing/rinsing fluid to the respective first and second arms (4, 5), which can be activated selectively and independently, consist of a first on/off electric valve (13c) arranged in series on the first branch (9) and of a second on/off electric valve (14c) arranged in series on the second branch (10); the control means (15) controlling the selective opening of the first and second electric valves (13c, 14c) for predetermined and different time periods independently for the first and second electric valves (13c, 14c); the hydraulic circuit (8b) further comprising hydraulically in sequence downstream of the mains water inlet (11) and upstream of the first and second branches (9, 10) a pressurized boiler (19) connected hydraulically to the first and second arms (4, 5) via the first and second electric valves (13c, 14c) so as to supply from the pressurized boiler (19) water for generating the washing/rinsing fluid.

5. Device according to Claim 1,
**characterized in that**
the means (13, 14) for supplying the washing/rinsing fluid to the respective first and second arms (4, 5), which can be activated selectively and independently, consist of a first on/off electric valve (13c) arranged in series on the first branch (9) and of a second on/off electric valve (14c) arranged in series on the second branch (10); the control means (15) controlling the selective opening of the first and second electric valves (13c, 14c) for predetermined and different time periods independently for the first and second electric valves (13c, 14c); the hydraulic circuit (8c) being provided hydraulically in series on the first and second branches (9,10), downstream of the mains water inlet (11) and downstream of the first and second electric valves (13c, 14c) respectively, with a first and a second pressurized boiler (20, 21) which can be activated independently at different temperatures by means of the control means (15); the first and second boilers (20, 21) being connected hydraulically directly to the first arm (4) and to the second arm (5), respectively, and being connected hydraulically, on the side opposite to the arms (4, 5) and via the first electric valve (13c) and the second electric valve (14c) to the mains water inlet (11), so as to supply from the first and second pressurized boilers (20, 21) water for generating the washing/rinsing fluid.

6. Washing/rinsing method for washing/rinsing dishware present inside a static dishwashing machine (1), wherein a washing/rinsing fluid is supplied to a first arm, for example upper arm (4), and to a second arm, for example lower arm (5), of the dishwashing machine via a hydraulic circuit (8, 8b, 8c) comprising a first branch (9) for feeding the first arm (4) and a second branch (10) for feeding the second arm (5), the first and second branches (9,10) being arranged hydraulically in parallel with each other between an inlet (11) for introducing mains water into the hydraulic circuit (8, 8b, 8c) and at least the first and second arms; wherein each first branch (9) and second branch (10) is provided hydraulically in series with means (13, 14) for supplying the washing/rinsing fluid to the respective first and second arms (4, 5), which can be activated selectively and independently; **characterized in that** the washing/rinsing fluid is supplied simultaneaously, selectively and independently to the first and second arms (4, 5) for time periods different from each other, depending on the type of dishware to be washed/rinsed, by using control means (15) which control the selective opening of the first and second electric valve (13c,14c) for prefixed and different times, said different time periods lasting for different periods of time.

7. Method according to Claim 6,
**characterized in that**
the washing/rinsing fluid is supplied to the first and second arms (4, 5) at different temperatures.

8. Static dishwashing machine (1), in particular of the professional type, comprising a liquid-tight sealable chamber (3) for housing dishware to be washed and rinsed, in which a first arm (4), for example upper arm, and a second arm (5), for example lower arm, are arranged, **characterized in that** it is provided with an adjustable washing/rinsing device (6, 6b, 6c) according to any one of Claims 1 to 5.

## Patentansprüche

1. Einstellbare Wasch-/Spülvorrichtung (6, 6b, 6c) für Geschirr, das sich in einer Stand-Geschirrspülmaschine (1), insbesondere professioneller Ausführung, befindet, aufweisend mindestens einen ersten Arm (4), beispielsweise einen oberen Arm, für ein Zuführen einer Wasch-/Spülflüssigkeit, mindestens einen zweiten Arm (5), zum Beispiel einen unteren Arm, für ein Zuführen einer Wasch-/Spülflüssigkeit, und Einrichtungen (7) für ein Zuführen der Wasch-/Spülflüssigkeit zu den Armen, einschließlich eines Hydraulikkreises (8, 8b, 8c), der Leitungswasser hydraulisch parallel zu dem mindestens ersten Arm (4) und zu dem mindestens zweiten Arm (5) zuführt, der Hydraulikkreis einen ersten Zweig (9) für ein Speisen des ersten Arms (4) und einen zweiten Zweig (10) für ein Speisen des zweiten Arms (5) aufweisend, der erste und der zweite Zweig (9, 10) hydraulisch parallel zueinander zwischen einem Einlass (11) für ein Einleiten von Leitungswasser in den Hydraulikkreis (8, 8b, 8c) und mindestens dem ersten und zweiten Arm angeordnet sind; wobei sowohl der erste Zweig (9) als auch der zweite Zweig (10) hydraulisch in Reihe mit Einrichtungen (13, 14) für ein Zuführen der Wasch-/Spülflüssigkeit zu dem jeweiligen ersten und zweiten Arm (4, 5) vorgesehen sind, die selektiv und unabhängig aktiviert werden können; die Wasch-/Spülvorrichtung ferner Steuereinrichtungen (15) für ein selektives Aktivieren der Einrichtungen (13, 14) für eine Versorgung des ersten und zweiten Zweigs (9, 10) aufweisend,
**dadurch gekennzeichnet, dass**
die Steuereinrichtungen (15) so ausgebildet sind, dass sie die Einrichtungen (13, 14) für die Versorgung des ersten und zweiten Zweigs (9, 10) gleichzeitig für Zeiträume, die sich voneinander unterscheiden, in Abhängigkeit der Art des Geschirrs, selektiv aktivieren, wobei die unterschiedlichen Zeiträume unterschiedlich lang sind.

2. Vorrichtung nach Anspruch 1,
**dadurch gekennzeichnet, dass**
die Einrichtungen (13, 14) für das Zuführen der Wasch-/Spülflüssigkeit zu dem jeweiligen ersten und zweiten Arm (9, 10), die selektiv und unabhängig aktiviert werden können, aus einer ersten elektrischen Pumpe (13b), die in Reihe an dem ersten Zweig (9) angeordnet ist, und aus einer zweiten elektrischen Pumpe (14b), die in Reihe an dem zweiten Zweig (10) angeordnet ist, bestehen; die Steuereinrichtungen (15) den selektiven Betrieb der ersten und zweiten elektrischen Pumpe (13b, 14b) für vorbestimmte und unterschiedliche Zeiträume unabhängig für die erste und zweite elektrische Pumpe (13b, 14b) steuern.

3. Vorrichtung nach Anspruch 2,
**dadurch gekennzeichnet, dass**
der Hydraulikkreis (8) hydraulisch in Reihe dem Leitungswassereinlass (11) nachgeschaltet und dem ersten und zweiten Zweig (9, 10) vorgeschaltet einen Atmosphärendruckkessel (30) aufweist, aus dem die erste und zweite elektrische Pumpe (13b, 14b) Wasser ansaugen, um die Wasch-/Spülflüssigkeit zu erzeugen.

4. Vorrichtung nach Anspruch 1,
**dadurch gekennzeichnet, dass**
die Einrichtungen (13, 14) für das Zuführen der Wasch-/Spülflüssigkeit zu dem jeweiligen ersten und zweiten Arm (4, 5), die selektiv und unabhängig aktiviert werden können, aus einem ersten elektrischen Ein/Aus-Ventil (13c), das in Reihe an dem ersten Zweig (9) angeordnet ist, und aus einem zweiten elektrischen Ein/Aus-Ventil (14c), das in Reihe an dem zweiten Zweig (10) angeordnet ist, bestehen; die Steuereinrichtungen (15) das selektive Öffnen des ersten und zweiten elektrischen Ventils (13c, 14c) für vorbestimmte und unterschiedliche Zeiträume unabhängig voneinander für das erste und zweite elektrische Ventil (13c, 14c) steuern; der Hydraulikkreis (8b) ferner hydraulisch in Reihe dem Hauptwassereinlasses (11) nachgeschaltet und dem ersten und dem zweiten Zweig (9, 10) vorgeschaltet einen Druckkessel (19) aufweisend, der hydraulisch mit dem ersten und zweiten Arm (4, 5) über das erste und das zweite elektrische Ventil (13c, 14c) verbunden ist, um Wasser aus dem Druckkessel (19) für ein Erzeugen der Spülflüssigkeit zuzuführen.

5. Vorrichtung nach Anspruch 1,
**dadurch gekennzeichnet, dass**
die Einrichtungen (13, 14) für das Zuführen der Wasch-/Spülflüssigkeit zu dem jeweiligen ersten und zweiten Arm (4, 5), die selektiv und unabhängig aktiviert werden können, aus einem ersten elektrischen Ein/Aus-Ventil (13c), das in Reihe an dem ersten Zweig (9) angeordnet ist, und aus einem zweiten elektrischen Ein/Aus-Ventil (14c), das in Reihe an dem zweiten Zweig (10) angeordnet ist, bestehen; die Steuereinrichtungen (15) das selektive Öffnen des ersten und zweiten elektrischen Ventils (13c, 14c) für vorbestimmte und unterschiedliche Zeiträume unabhängig für das erste und zweite elektrische Ventil (13c, 14c) steuern; der Hydraulikkreis (8c) jeweils hydraulisch in Reihe an dem ersten und dem zweiten Zweig (9, 10) dem Leitungswassereinlass (11) nachgeschaltet und dem ersten und zweiten elektrischen Ventil (13c, 14c) nachgeschaltet mit einem ersten und einem zweiten Druckkessel (20, 21) vorgesehen ist, die unabhängig bei unterschiedlichen Temperaturen mittels der Steuereinrichtungen (15) aktiviert werden können; der erste und zweite Kessel (20, 21) jeweils hydraulisch direkt mit dem ersten Arm (4) und mit dem zweiten Arm (5) verbunden sind, und hydraulisch auf der den Armen (4, 5) gegenüberliegenden Seite und über das erste elektrische Ventil (13c) und das zweite elektrische Ventil (14c) mit dem Leitungswassereinlass (11) verbunden sind, um von dem ersten und zweiten Druckkessel (20, 21) Wasser für ein Erzeugen der Wasch-/Spülflüssigkeit zuzuführen.

6. Wasch-/Spülverfahren für ein Waschen/Spülen von in einer Stand-Geschirrspülmaschine (1) befindlichem Geschirr, beispielsweise einem oberen Arm° (4), und einem zweiten Arm, beispielsweise einem unteren Arm (5), wobei eine Wasch-/Spülflüssigkeit über einen Hydraulikkreis (8, 8b, 8c), der einen ersten Zweig (9) für eine Versorgung des ersten Arms (4) und einen zweiten Zweig (10) für eine Versorgung des zweiten Arms (5) aufweist, einem ersten Arm, der Geschirrspülmaschine zugeführt wird, der erste und der zweite Zweig (9, 10) hydraulisch parallel zueinander zwischen einem Einlass (11) für ein Einleiten von Leitungswasser in den Hydraulikkreis (8, 8b, 8c) und mindestens dem ersten und zweiten Arm angeordnet sind; wobei sowohl der erste Zweig (9) als auch der zweite Zweig (10) hydraulisch in Reihe mit Einrichtungen (13, 14) für das Zuführen der Wasch-/Spülflüssigkeit zu dem jeweiligen ersten und zweiten Arm (4, 5) vorgesehen sind, die selektiv und unabhängig aktiviert werden können, **dadurch gekennzeichnet, dass** die Wasch-/Spülflüssigkeit gleichzeitig, selektiv und unabhängig voneinander dem ersten und zweiten Arm (4, 5) für sich unterscheidende Zeiträume, je nach Art des zu waschenden/zu spülenden Geschirrs, zugeführt wird, indem die Steuereinrichtungen (15) verwendet werden, die das selektive Öffnen des ersten und zweiten elektrischen Ventils (13c, 14c) für vorbestimmte und unterschiedliche Zeiten steuern, wobei die unterschiedlichen Zeiträume unterschiedlich lang sind.

7. Verfahren nach Anspruch 6,
**dadurch gekennzeichnet, dass**
die Wasch-/Spülflüssigkeit dem ersten und zweiten Arm (4, 5) mit unterschiedlichen Temperaturen zugeführt wird.

8. Stand-Geschirrspülmaschine (1), insbesondere professioneller Ausführung, aufweisend eine flüssigkeitsdicht verschließbare Kammer (3) für ein Aufnehmen von zu waschendem und zu spülendem Geschirr, in der ein erster Arm (4), beispielsweise ein oberer Arm, und ein zweiter Arm (5), beispielsweise ein unterer Arm, angeordnet sind, **dadurch gekennzeichnet, dass** sie mit einer einstellbaren Wasch-/Spülvorrichtung (6, 6b, 6c) nach einem der Ansprüche 1 bis 5 versehen ist.

## Revendications

1. Dispositif de lavage/rinçage réglable (6, 6b, 6c) pour la vaisselle contenue à l'intérieur d'un lave-vaisselle statique (1), en particulier de type professionnel, comprenant l'au moins un premier bras (4), par exemple bras supérieur, pour alimenter un fluide de lavage/rinçage, l'au moins un deuxième bras (5), par exemple bras inférieur, pour alimenter un fluide de lavage/rinçage, et un moyen (7) pour approvisionner le fluide de lavage/rinçage vers les bras comprenant un circuit hydraulique (8, 8b, 8c) qui approvisionne de manière hydraulique de l'eau de réseau en parallèle au premier bras (4) et au deuxième bras (5), le circuit hydraulique comprenant une première branche (9) pour approvisionner le premier bras (4) et une deuxième branche (10) pour approvisionner le deuxième bras (5), les première et deuxième branches (9,10) étant agencées hydrauliquement en parallèle l'un par rapport à l'autre entre une entrée (11) pour introduire de l'eau de réseau dans le circuit hydraulique (8, 8b, 8c) et au moins les premier et deuxième bras ; dans lequel chaque première branche (9) et deuxième branche (10) est prévue hydrauliquement en série avec des moyens (13, 14) pour alimenter le fluide de lavage/rinçage vers les premier et deuxième bras (4, 5) respectifs, qui peuvent être activés sélectivement et indépendamment ; le dispositif de lavage/rinçage comprenant en outre des moyens de commande (15) pour activer sélectivement les moyens (13, 14) pour alimenter les première et deuxième branches (9, 10), **caractérisé en ce que**
les moyens de commande (15) sont configurés pour activer sélectivement les moyens (13, 14) pour alimenter les première et deuxième branches (9, 10) simultanément pour des périodes de temps différentes l'une de l'autre, en fonction du type de vaisselle, lesdites périodes de temps différentes durant des périodes de temps différentes.

2. Dispositif selon la revendication 1,
**caractérisé en ce que**
les moyens (13, 14) pour alimenter le fluide de lavage/rinçage vers les premier et deuxième bras (9, 10) respectifs, qui peuvent être activés sélectivement et indépendamment, sont constitués d'une première pompe électrique (13b) agencée en série sur la première branche (9) et d'une deuxième pompe électrique (14b) agencée en série sur la deuxième branche (10) ; les moyens de commande (15) commandant le fonctionnement sélectif des première et deuxième pompes électriques (13b, 14b) pendant des périodes de temps prédéterminées et différentes indépendamment pour les première et deuxième pompes électriques (13b, 14b).

3. Dispositif selon la revendication 2,
**caractérisé en ce que**
le circuit hydraulique (8) comprend hydrauliquement en séquence en aval de l'entrée d'eau de réseau (11) et en amont des première et deuxième branches (9, 10) une chaudière à pression atmosphérique (30) à partir de laquelle les première et deuxième pompes électriques (13b, 14b) tirent de l'eau afin de générer le fluide de lavage/rinçage.

4. Dispositif selon la revendication 1,
**caractérisé en ce que**
les moyens (13, 14) pour alimenter le fluide de lavage/rinçage vers les premier et deuxième bras (4, 5) respectifs, qui peuvent être activés sélectivement et indépendamment, sont constitués d'une première électrovanne tout-ou-rien (13c) agencée en série sur la première branche (9) et d'une deuxième électrovanne tout-ou-rien (14c) agencée en série sur la deuxième branche (10) ; les moyens de commande (15) commandant l'ouverture sélective des première et deuxième électrovannes (13b, 14b) pendant des périodes de temps prédéterminées et différentes indépendamment pour les première et deuxième électrovannes (13c, 14c) ; le circuit hydraulique (8b) comprenant en outre hydrauliquement en séquence en aval de l'entrée d'eau de réseau (11) et en amont des première et deuxième branches (9, 10) une chaudière à pression (19) reliée hydrauliquement aux premier et deuxième bras (4, 5) par l'intermédiaire des première et deuxième électrovannes (13c, 14c) de manière à alimenter à partir de la chaudière à pression (19) de l'eau pour générer les fluides de lavage/rinçage.

5. Dispositif selon la revendication 1,
**caractérisé en ce que**
les moyens (13, 14) pour alimenter le fluide de lavage/rinçage vers les premier et deuxième bras (4, 5) respectifs, qui peuvent être activés sélectivement et indépendamment, sont constitués d'une première électrovanne tout-ou-rien (13c) agencée en série sur la première branche (9) et d'une deuxième électrovanne tout-ou-rien (14c) agencée en série sur la deuxième branche (10) ; les moyens de commande (15) commandant l'ouverture sélective des première et deuxième électrovannes (13c, 14c) pendant des périodes de temps prédéterminées et différentes indépendamment pour les première et deuxième électrovannes (13c, 14c) ; le circuit hydraulique (8c) étant prévu hydrauliquement en série sur les première et deuxième branches (9,10), en aval de l'entrée d'eau de réseau (11) et en aval des première et deuxième électrovannes (13c, 14c) respectivement, avec une première et une deuxième chaudières à pression (20, 21) qui peuvent être activées indépendamment à différentes températures au moyen du moyen de commande (15) ; les première et deuxième chaudières (20, 21) étant relié hydrauliquement directement au premier bras (4) et au deuxième bras (5), respectivement, et étant relié hydrauliquement, sur le côté opposé aux bras (4, 5) et par l'intermédiaire de la première électrovanne (13c) et de la deuxième électrovanne (14c) à l'entrée d'eau de réseau (11), afin d'alimenter à partir des première et deuxième chaudières à pression (20, 21) de l'eau pour générer le fluide de lavage/rinçage.

6. Procédé de lavage/rinçage pour laver/rincer de la vaisselle présente à l'intérieur d'un lave-vaisselle statique (1), dans lequel un fluide de lavage/rinçage est alimenté vers un premier bras, par exemple un bras supérieur (4), et vers un deuxième bras, par exemple un bras inférieur (5), du lave-vaisselle par l'intermédiaire d'un circuit hydraulique (8, 8b, 8c) comprenant une première branche (9) pour alimenter le premier bras (4) et une deuxième branche (10) pour alimenter le deuxième bras (5), les première et deuxième branches (9,10) étant agencées hydrauliquement en parallèle l'une par rapport à l'autre entre une entrée (11) pour introduire de l'eau de réseau dans le circuit hydraulique (8, 8b, 8c) et au moins les premier et deuxième bras ; dans lequel chaque première branche (9) et deuxième branche (10) est prévue hydrauliquement en série avec des moyens (13, 14) pour alimenter le fluide de lavage/rinçage vers les premier et deuxième bras (4, 5) respectifs, qui peuvent être activés sélectivement et indépendamment ; **caractérisé en ce que** le fluide de lavage/rinçage est alimenté simultanément, sélectivement et indépendamment vers les premier et deuxième bras (4, 5) pendant des périodes de temps différentes les unes des autres, en fonction du type de vaisselle à laver/rincer, en utilisant des moyens de commande (15) qui commandent l'ouverture sélective des première et deuxième électrovannes (13c,14c) pendant des temps préfixés et différents, lesdites périodes de temps différentes durant différentes périodes de temps.

7. Procédé selon la revendication 6,
**caractérisé en ce que**
le fluide de lavage/rinçage est alimenté vers les premier et deuxième bras (4, 5) à des températures différentes.

8. Lave-vaisselle statique (1), en particulier du type professionnel, comprenant une chambre étanche aux liquides (3), destinée à loger la vaisselle à laver et à rincer, dans lequel sont disposés un premier bras (4), par exemple un bras supérieur, et un deuxième bras (5), par exemple un bras inférieur, **caractérisé en ce qu'**il est pourvu d'un dispositif de lavage/rinçage réglable (6, 6b, 6c) selon l'une quelconque des revendications 1 à 5.
